# FASCICULE DE BREVET EUROPEEN

(11) **EP 3 251 879 B1**
(45) Date de publication et mention de la délivrance du brevet: **20.03.2019**
(21) Numéro de dépôt: 17170298.8
(22) Date de dépôt: 09.05.2017
(51) Int. Cl.: B60G 7/04, B60G 11/58, B60G 11/52

(54) **SYSTEME DE SUSPENSION HYDRAULIQUE D'UNE ROUE D'UN VEHICULE**
HYDRAULISCHES AUFHÄNGUNGSSYSTEM EINES RADS EINES FAHRZEUGS
HYDRAULIC SUSPENSION SYSTEM OF A VEHICLE WHEEL

(30) Priorité: 01.06.2016 FR 1654944
(43) Date de publication de la demande: 06.12.2017
(73) Titulaire: PSA Automobiles SA, 78300 Poissy (FR)
(72) Inventeur: ALLEGRE, Jean Marc, 91470 LIMOURS (FR); MONTEIL, Christophe, 91640 BRIIS SOUS FORGES (FR)

(56) Documents cités:
- EP-A2- 0 182 607
- DE-B- 1 012 780
- DE-B- 1 101 182
- FR-A- 490 665
- FR-A- 1 221 773
- FR-A1- 2 600 949
- JP-A- S6 264 603

## Description

L'invention concerne un système de suspension hydraulique d'une roue d'un véhicule, notamment automobile.

De manière connue en soi, un système de suspension hydraulique d'une roue d'un véhicule, notamment automobile, comprend un amortisseur à piston mobile dans son cylindre correspondant et interposé entre la caisse et le porte-fusée de roue du véhicule. Le rôle de cet amortisseur est de fortement limiter les oscillations transmises par les roues à la caisse du véhicule lorsque les roues rencontrent des aspérités ou des obstacles présents sur la route sur laquelle le véhicule circule.

De manière à limiter et freiner la course du piston de l'amortisseur, ce dernier comprend une butée d'attaque mécanique compressible. Le rôle de cette butée d'attaque est également de protéger le châssis du véhicule lors de l'apparition de forts débattements de la roue correspondante, dus à des incidents ou à des obstacles importants, comme par exemple les ralentisseurs du type dos-d'âne. En outre, de manière à ne pas réduire la course du piston dans le cylindre de l'amortisseur et assurer un débattement de roue suffisant, il est courant de déporter la butée d'attaque par rapport à l'amortisseur.

Il est notamment connu du document FR2600949, qui divulgue le préambule de la revendication 1, une butée d'attaque hydraulique déportée et disposée entre la caisse du véhicule et un bras du train de suspension en étant fixée à la caisse. Cette butée d'attaque déportée, en élastomère et remplie de liquide, assure un amortissement progressif de grande amplitude.

Cependant, la butée d'attaque décrite dans le document de brevet précité n'est pas en mesure de limiter les vibrations transmises de la roue correspondante à la caisse du véhicule lors des débattements de la roue. Le confort pour les occupants du véhicule en est alors fortement pénalisé dans ces situations.

Les documents EP0182607 A2 et FR1221773 A divulguent d'autres systèmes de suspension.

La présente invention a pour but de pallier les inconvénients ci-dessus de l'art antérieur.

Pour atteindre ce but, l'invention concerne un système de suspension hydraulique d'une roue d'un véhicule, notamment automobile, comprenant un amortisseur hydraulique, une butée d'attaque déportée par rapport à l'amortisseur, ce dernier et la butée d'attaque étant interposés entre la caisse et le train de roues correspondant du véhicule, la butée d'attaque étant hydraulique et le système de suspension comprenant un élément élastiquement déformable interposé entre le train de roues du véhicule et la butée d'attaque hydraulique et solidaire du train de roues du véhicule et de la butée d'attaque hydraulique de manière à former un ensemble oscillant autour d'une position d'équilibre, dans laquelle la butée d'attaque hydraulique est positionnée à distance de la caisse et du train de roues du véhicule, et agencé pour limiter la transmission des vibrations de la roue à la caisse du véhicule lors des débattements de la roue correspondante.

Selon une autre particularité, la première course en attaque du piston de l'amortisseur est comprise entre zéro et vingt millimètres à partir d'une assiette de référence du véhicule.

Selon l'invention, l'élément élastiquement déformable est solidaire d'un bras de suspension du train de roues correspondant.

Selon une autre particularité, l'élément élastiquement déformable est un ressort hélicoïdal dont les extrémités sont respectivement solidaires de la butée d'attaque hydraulique et du bras de suspension du train de roues correspondant.

Selon l'invention, la butée d'attaque hydraulique comprend un cylindre et un piston mobiles l'un par rapport à l'autre, le piston comprenant une tige coaxiale au cylindre et faisant saillie de ce dernier vers la caisse du véhicule de sorte que l'extrémité de la tige et l'extrémité du cylindre opposée à la tige soient aptes à venir en appui respectivement contre la caisse et contre le bras de suspension du véhicule lorsque la butée d'attaque hydraulique est active.

Selon l'invention, le cylindre de la butée d'attaque hydraulique comprend une paroi cylindrique interne définissant une chambre interne de compression remplie d'un fluide hydraulique et dans laquelle le piston est mobile par rapport au cylindre, et une chambre externe concentrique de compensation du volume occupé par la tige dans la chambre de compression du cylindre de la butée d'attaque hydraulique.

Selon une autre particularité, la paroi cylindrique interne du cylindre de la butée d'attaque hydraulique comprend une pluralité de trous radiaux la traversant et permettant, lorsque le piston et le cylindre de la butée d'attaque hydraulique se déplacent l'un par rapport à l'autre, la circulation du fluide entre la chambre de compression et la chambre de compensation du cylindre de la butée d'attaque hydraulique.

Selon une autre particularité, la butée d'attaque hydraulique comprend une butée mécanique compressible annulaire traversée par la tige du piston et solidaire du cylindre de la butée d'attaque hydraulique en regard de la caisse et apte à venir en appui contre la caisse du véhicule lorsque le piston arrive en fin de course dans le cylindre de la butée d'attaque hydraulique.

Selon une autre particularité, le système de suspension hydraulique comprend un ressort de suspension monté autour de l'amortisseur.

L'invention concerne également un train de roues d'un véhicule, dont chaque roue comprend un système de suspension tel que décrit précédemment.

L'invention concerne également un véhicule automobile dont le train de roues arrière est conforme au train de roues décrit précédemment.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :

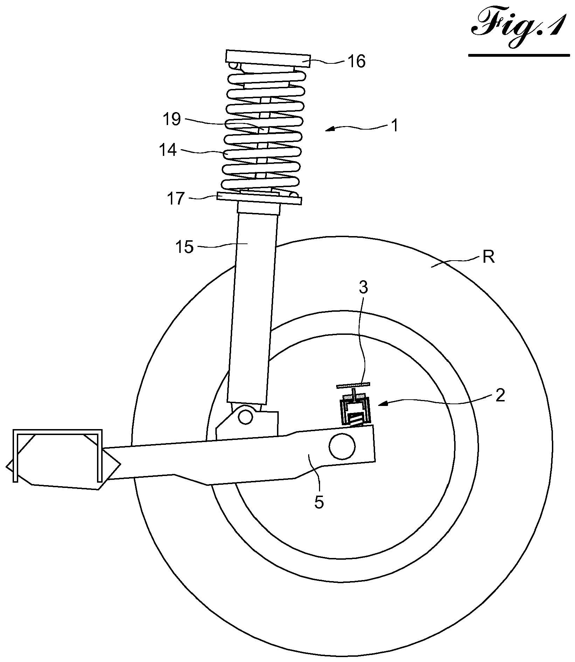

- La figure 1 représente une vue de côté du système de suspension hydraulique pourvu d'une ensemble oscillant selon l'invention ;
- Les figures 2A à 2D représentent une cinématique du fonctionnement en mode amortisseur de l'ensemble oscillant de l'invention comprenant un ressort hélicoïdal et une butée d'attaque hydraulique représentée en coupe longitudinale ;
- Les figures 3A à 3D représentent une cinématique du fonctionnement en mode oscillatoire de l'ensemble oscillant des figures 2A à 2D.

En référence aux figures, un système de suspension hydraulique d'une roue R d'un véhicule, notamment automobile, va maintenant être décrit.

La suspension hydraulique du véhicule comprend un amortisseur hydraulique 1 comprenant un corps 15 en forme de cylindre et un piston (non représenté) mobile dans le cylindre 15. Cet amortisseur 1 est interposé entre la caisse 3 du véhicule et le train de roues correspondant, préférentiellement le train de roues arrière. Le piston, solidaire d'une première extrémité d'une tige 19 dont l'autre extrémité est reliée à une coupelle supérieure 16 elle-même solidaire de la caisse 3 du véhicule, délimite dans le cylindre 15 deux chambres respectivement de compression et de détente dans lesquelles du fluide hydraulique incompressible (huile) compris dans le cylindre 15 est destiné à circuler de part et d'autre du piston au gré des mouvements de ce dernier dans le cylindre 15.

Le comportement de l'amortisseur hydraulique 1 du système de suspension hydraulique du véhicule peut être décrit selon une loi d'amortissement dans laquelle l'effort exercé par l'amortisseur 1 dépend de la vitesse de débattement de la roue R correspondante. Autrement dit, plus le piston se déplace rapidement dans le cylindre 15 de l'amortisseur 1, plus l'effort exercé par l'amortisseur 1 sur la caisse 3 du véhicule est important.

Le système de suspension hydraulique comprend également, pour chaque roue R du véhicule, un ressort de suspension 14 monté autour de l'amortisseur 1 et dont les extrémités sont en appui respectivement contre la caisse 3 du véhicule par l'intermédiaire de la coupelle supérieure 16 et contre une coupelle inférieure 17 solidaire du cylindre 15 de l'amortisseur. Le ressort de suspension 14 est un élément de raideur dont le comportement peut être décrit par une loi selon laquelle l'effort exercé par le ressort de suspension 14 sur la caisse 3 du véhicule dépend de l'amplitude du débattement de la roue R correspondante. Autrement dit, plus le ressort de suspension 14 est comprimé, plus l'effort exercé sur la caisse 3 du véhicule est important. Le ressort de suspension 14 permet essentiellement de porter la caisse 3 du véhicule tout en autorisant les débattements.

Selon l'invention, le système de suspension comprend également une butée d'attaque hydraulique 2. Cette butée d'attaque hydraulique 2 est assimilable à un amortisseur et exerce donc un effort sur la caisse 3 du véhicule en fonction de la vitesse du débattement de la roue R correspondante. De la même manière que l'amortisseur hydraulique 1, l'effort exercé sur la caisse 3 du véhicule par la butée d'attaque hydraulique 2 est d'autant plus grand que la vitesse du débattement de la roue R correspondante est importante.

De manière à ne pas réduire la course du piston dans le cylindre 15 de l'amortisseur 1 et assurer un débattement de roue R suffisant, la butée d'attaque hydraulique 2 est déportée par rapport à l'amortisseur 1. En outre, cette butée d'attaque hydraulique 2 est interposée entre la caisse 3 du véhicule et le train de roues, préférentiellement entre la caisse 3 du véhicule et le bras de suspension 5 du train de roues correspondant en étant solidaire du bras de suspension 5.

La butée d'attaque hydraulique 2 comprend un cylindre 6 et un piston 7 mobiles l'un par rapport à l'autre. Le piston 7 est mobile dans une chambre de compression 10 du cylindre 6 remplie d'un fluide hydraulique incompressible (huile), cette chambre de compression 10 étant délimitée par une première paroi cylindrique interne 9 concentrique à la paroi externe 6a du cylindre 6. La paroi externe 6a du cylindre 6 et la paroi interne 9 délimitent une chambre concentrique 11. Cette chambre concentrique 11 communique avec la chambre de compression 10 pour assurer la circulation de fluide entre les deux chambres 10, 11.

Préférentiellement, la chambre de compression 10 et la chambre concentrique 11 communiquent par l'intermédiaire d'une pluralité de trous radiaux 12 traversant la première paroi cylindrique interne 9 du cylindre 6, de sorte que le fluide hydraulique puisse circuler d'une chambre 10, 11 à l'autre au travers de ces trous radiaux 12 lorsque le piston 7 de la butée d'attaque hydraulique 2 est mobile par rapport au cylindre 6.

Le piston 7 de la butée d'attaque hydraulique 2 présente la forme d'une jupe cylindrique ouverte du côté de la paroi de fond 6b du cylindre. La paroi de fond 6b du cylindre 6 est surélevée par rapport à la base du cylindre 6 pour définir avec une seconde paroi cylindrique interne 6c de plus petit diamètre que la première paroi cylindrique interne 9 un évidement cylindrique. Ainsi, les première 6a et seconde 6c parois cylindriques internes définissent entre elles une chambre annulaire 10a dans laquelle peut pénétrer une portion de la jupe cylindrique du piston 7 de la butée d'attaque hydraulique 2.

Le piston 7 de la butée d'attaque hydraulique 2 comprend en outre une tige 8 solidaire de la paroi transversale du piston 7 en faisant saillie coaxialement et perpendiculairement de la paroi transversale du piston 7, en direction de la caisse 3 du véhicule. Les trous radiaux 12 sont formés au travers de la portion inférieure de la première partie de paroi interne 9 et située en regard de la portion inférieure de la seconde partie de paroi interne 6c. Ainsi, lorsque le piston 7 de la butée d'attaque 2 se déplace dans le cylindre 6, du fluide hydraulique circule entre la chambre de compression 10 et la chambre externe concentrique 11 au travers des trous radiaux 12 pour compenser le volume occupé par la tige 8 du piston 7 dans la chambre de compression 10 du cylindre 6. Dès lors, dans la suite de la description, la chambre externe concentrique 11 sera nommée chambre de compensation.

En outre, le piston 7 de la butée d'attaque hydraulique 2 comprend dans sa paroi transversale plane des trous 18 la traversant pour permettre la circulation de fluide hydraulique de part et d'autre de cette paroi transversale plane du piston 7, afin de faciliter le mouvement de ce dernier dans le cylindre 6 de la butée d'attaque hydraulique 2.

Enfin, La butée d'attaque hydraulique 2 comprend également une butée mécanique compressible annulaire 13 traversée par la tige 8 du piston 7 et solidaire du cylindre 6 en partie supérieure de celui-ci de la butée d'attaque hydraulique 2. Cette butée mécanique 13 est positionnée en regard de la caisse 3 du véhicule, et sa fonction sera précisée ci-après.

Le système de suspension comprend un élément élastiquement déformable 4 interposé entre la butée d'attaque hydraulique 2 et le bras de suspension 5 du train de roues correspondant. Préférentiellement, et comme représenté sur les figures, l'élément élastiquement déformable est un ressort hélicoïdal dont une inférieure des extrémités est solidaire du bras de suspension 5, et dont une partie d'extrémité supérieure est logée coaxialement dans l'évidement sous la paroi de fond 6b du cylindre 6 de la butée d'attaque hydraulique 2.

La butée d'attaque hydraulique 2 et le ressort 4 sont agencés de manière à former un ensemble oscillant autour d'une position d'équilibre dans laquelle la butée d'attaque hydraulique 2 est positionnée à distance de la caisse 3 du véhicule et du bras de suspension 5 du train de roues correspondant.

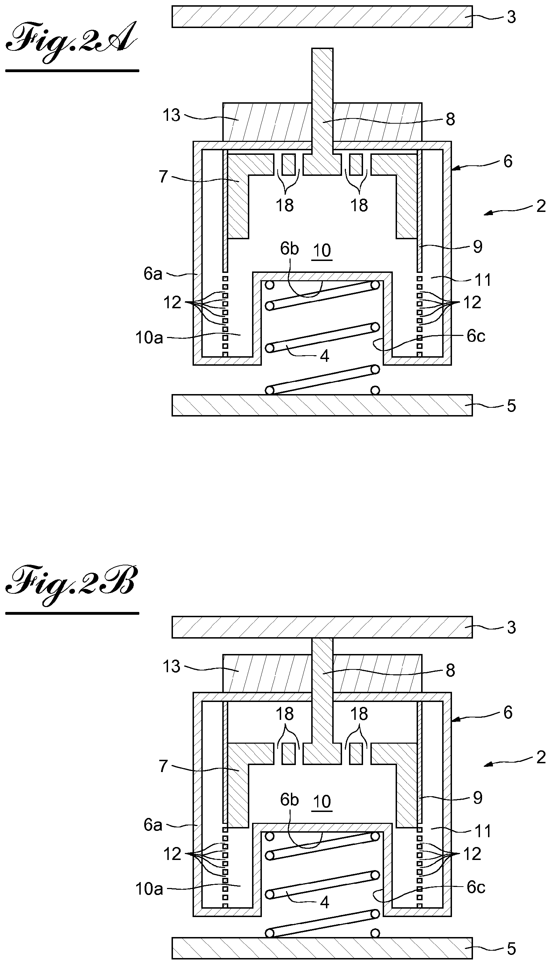

En référence aux figures 2A à 2D, l'activation de la butée d'attaque hydraulique 2 selon l'invention va maintenant être décrite.

Comme représenté à la figure 2A, lorsque les débattements en attaque de la roue R correspondante sont faibles, c'est à dire inférieurs à une première valeur déterminée, la butée d'attaque hydraulique 2 demeure à distance à la fois de la caisse 3 du véhicule et du bras de suspension 5 du train de roues correspondant.

Comme représenté à la figure 2B, lorsque les débattements en attaque de la roue R dépassent la première valeur déterminée, la tige 8 du piston de la butée d'attaque hydraulique 2 vient en appui contre la caisse 3 du véhicule. Le piston 7 est alors déplacé dans le cylindre 6 en direction de la paroi de fond de ce dernier. A mesure que la tige 8 et le piston 7 pénètrent dans la chambre de compression, du fluide hydraulique circule vers la chambre de compensation 11 au travers des trous radiaux 12. Simultanément, le ressort hélicoïdal 4 est comprimé de manière que la base inférieure du cylindre 6 de la butée d'attaque hydraulique 2 se rapproche du bras de suspension 5.

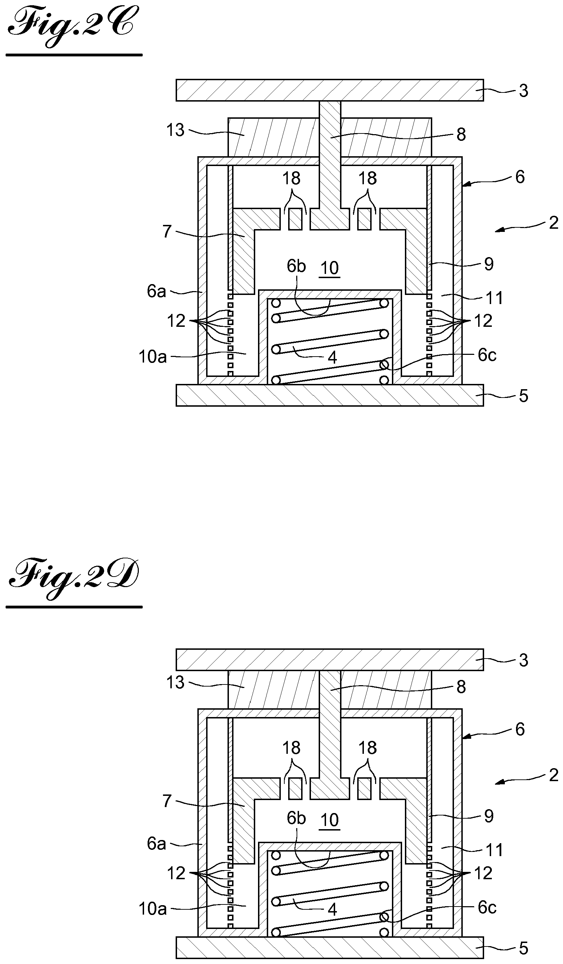

Comme représenté à la figure 2C, lorsque les débattements en attaque de la roue R dépassent une deuxième valeur déterminée supérieure à la première, la base inférieure du cylindre 6 de la butée d'attaque hydraulique 2 vient en appui contre le bras de suspension 5. Plus la valeur du débattement en attaque est grande, plus la roue R est proche de la caisse 3 du véhicule. Enfin, cette figure 2C fait bien apparaitre que le piston 7 de la butée d'attaque hydraulique 2 n'est pas encore arrivé en fin de course dans le cylindre 6.

Comme représenté à la figure 2D, lorsque les débattements en attaque de la roue R sont importants et dépassent une troisième valeur supérieure à la deuxième, le piston 7 de la butée d'attaque hydraulique 2 arrive au voisinage de sa fin de course et la butée mécanique 13 entre en contact avec la caisse 3 du véhicule. De préférence, la butée d'attaque mécanique 13 est en matériau élastomère présentant une très forte constante de raideur, de sorte que l'effort exercé par la butée d'attaque mécanique 13 sur la caisse 3 du véhicule augmente très rapidement avec le débattement en attaque de la roue. La très forte raideur de cette butée mécanique 13 permet d'amortir fortement les débattements de roue importants, et d'assurer un freinage plus brusque du piston 7 de la butée d'attaque hydraulique 2 dans le but de protéger la caisse 3 et le châssis du véhicule.

Ainsi, les figures 2B et 2C montrent un amortissement essentiellement hydraulique de la butée d'attaque hydraulique 2, alors que la figure 2D montre un amortissement mécanique pour éviter que la caisse 3 du véhicule ne se rapproche trop du train de roues du véhicule, et préserver l'intégrité du véhicule.

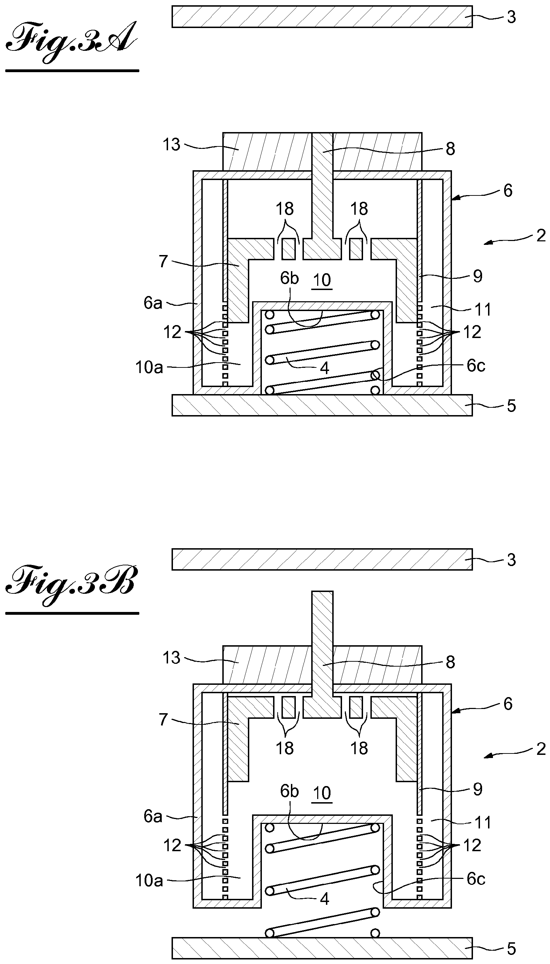

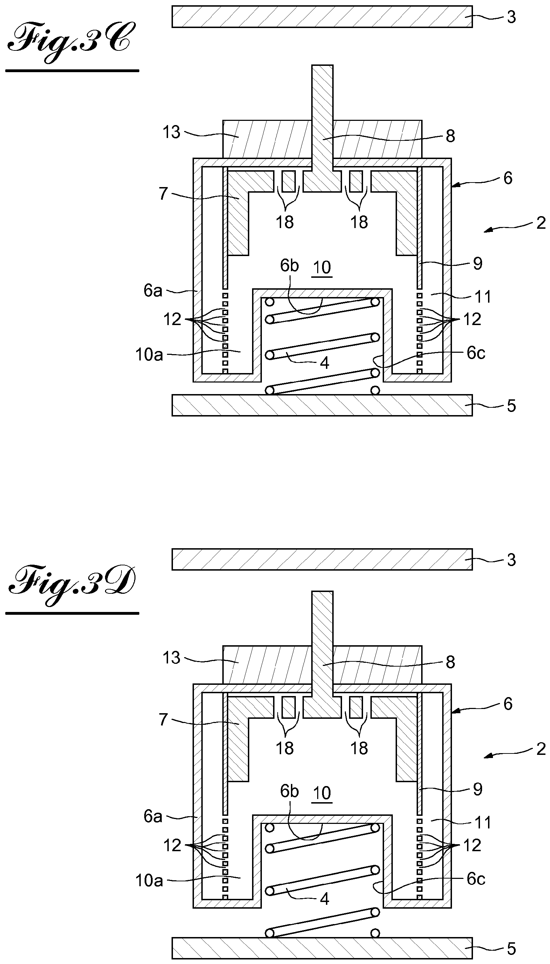

En référence aux figures 3A à 3D, le fonctionnement de la butée d'attaque hydraulique 2 couplée au ressort hélicoïdal 4 selon l'invention va maintenant être décrit lorsque les débattements en attaque de la roue R sont faibles. Des débattements faibles correspondent à une circulation du véhicule sur une route en bon état, sans obstacles.

La figure 3A représente la butée d'attaque hydraulique 2 dans la situation de la figure 2D, alors que la roue R correspondante vient de s'éloigner de la caisse 3 du véhicule de sorte que ni le piston 7 de la butée d'attaque hydraulique 2 ni la butée mécanique 13 ne soient en contact avec la caisse du véhicule. Le ressort hélicoïdal 4, exerçant une force sur la paroi de fond 6b du cylindre 6 de la butée d'attaque hydraulique 2, cette dernière va se déplacer vers la caisse 3 du véhicule pour retourner vers une position dans laquelle elle demeure à distance du bras de suspension 5 du train de roues et de la caisse 3 du véhicule.

Les figures 3B à 3D montrent une période d'oscillation de l'ensemble oscillant formé par la butée d'attaque hydraulique 2 et le ressort hélicoïdal 4 autour de la position d'équilibre de l'ensemble oscillant, lorsque les débattements de la roue R correspondante sont faibles. Les faibles débattements de la roue R occasionnent des vibrations mécaniques qui sont susceptibles d'être transmises de la roue R à la caisse 3 du véhicule, ce qui est préjudiciable au confort du conducteur et des passagers du véhicule. La fréquence de résonnance de l'ensemble oscillant est proche de la fréquence des vibrations transmises des roues à la caisse 3 du véhicule. Ainsi, lors des faibles débattements de la roue correspondante, les vibrations mécaniques sont transmises à l'ensemble oscillant qui entre alors en résonnance et oscille autour de la position d'équilibre de la butée d'attaque hydraulique 2.

De la sorte, l'ensemble oscillant absorbe les vibrations mécaniques provenant de la roue R correspondante et de fait limite fortement la transmission de ces vibrations à la caisse 3 du véhicule. Le confort des occupants du véhicule est alors amélioré lors des débattements de roue R de faible amplitude.

## Revendications

1. Système de suspension hydraulique d'une roue (R) d'un véhicule, notamment automobile, comprenant un amortisseur hydraulique (1), une butée d'attaque (2) déportée par rapport à l'amortisseur (1), ce dernier et la butée d'attaque (2) étant interposés entre la caisse (3) et le train de roues correspondant du véhicule, dans lequel la butée d'attaque (2) est hydraulique et **caractérisé en ce que** le système de suspension comprend un élément élastiquement déformable (4) interposé entre le train de roues du véhicule et la butée d'attaque hydraulique (2) et solidaire du train de roues du véhicule et de la butée d'attaque hydraulique (2) de manière à former un ensemble oscillant autour d'une position d'équilibre, dans laquelle la butée d'attaque hydraulique (2) est positionnée à distance de la caisse (3) et du train de roues du véhicule, et agencé pour limiter la transmission des vibrations de la roue (R) à la caisse (3) du véhicule lors des débattements de la roue correspondante (R), dans lequel l'élément élastiquement déformable (4) est solidaire d'un bras de suspension (5) du train de roues correspondant, et dans lequel la butée d'attaque hydraulique (2) comprend un cylindre (6) et un piston (7) mobiles l'un par rapport à l'autre, le piston (7) comprenant une tige (8) coaxiale au cylindre (6) et faisant saillie de ce dernier vers la caisse (3) du véhicule de sorte que l'extrémité de la tige (8) et l'extrémité du cylindre (6) opposée à la tige (8) soient aptes à venir en appui respectivement contre la caisse (3) et contre le bras de suspension (5) du véhicule lorsque la butée d'attaque hydraulique (2) est active, et dans lequel le cylindre (6) de la butée d'attaque hydraulique (2) comprend une paroi cylindrique interne (9) définissant une chambre interne de compression (10) remplie d'un fluide hydraulique et dans laquelle le piston (7) est mobile par rapport au cylindre (6), et une chambre externe concentrique (11) de compensation du volume occupé par la tige (8) dans la chambre de compression du cylindre (6) de la butée d'attaque hydraulique (2).

2. Système de suspension selon la revendication 1, **caractérisé en ce que** l'élément élastiquement déformable (4) est un ressort hélicoïdal dont les extrémités sont respectivement solidaires de la butée d'attaque hydraulique (2) et du bras de suspension (5) du train de roues correspondant.

3. Système de suspension selon la revendication 1 ou 2, **caractérisé en ce que** la paroi cylindrique interne (9) du cylindre (6) de la butée d'attaque hydraulique (2) comprend une pluralité de trous radiaux (12) la traversant et permettant, lorsque le piston (7) et le cylindre (6) de la butée d'attaque hydraulique (2) se déplacent l'un par rapport à l'autre, la circulation du fluide entre la chambre de compression (10) et la chambre de compensation (11) du cylindre (6) de la butée d'attaque hydraulique (2).

4. Système de suspension selon la revendication 1, 2 ou 3, caractérisé que la butée d'attaque hydraulique (2) comprend une butée mécanique compressible annulaire (13) traversée par la tige (8) du piston (7) et solidaire du cylindre (6) de la butée d'attaque hydraulique (2) en regard de la caisse (3) et apte à venir en appui contre la caisse (3) du véhicule lorsque le piston (7) arrive en fin de course dans le cylindre (6) de la butée d'attaque hydraulique (2).

5. Système de suspension selon l'une quelconque des revendications 1 à 4, **caractérisé en ce qu'**il comprend un ressort de suspension (14) monté autour de l'amortisseur (1).

6. Train de roues d'un véhicule, dont chaque roue (R) comprend un système de suspension selon l'une quelconque des revendications 1 à 5.

7. Véhicule automobile dont le train de roues arrière est conforme au train de roues selon la revendication 6.

## Patentansprüche

1. System zur hydraulischen Aufhängung eines Rades (R) eines, insbesondere Kraft-, Fahrzeugs, umfassend einen hydraulischen Dämpfer (1), einen Eingriffsanschlag (2), der in Bezug auf den Dämpfer (1) versetzt ist, wobei dieser letztere und der Eingriffsanschlag (2) zwischen der Karosserie (3) und dem entsprechenden Radsatz des Fahrzeugs eingefügt sind, wobei der Eingriffsanschlag (2) hydraulisch ist, und **dadurch gekennzeichnet, dass** das Aufhängungssystem ein elastisch verformbares Element (4) umfasst, das zwischen dem Radsatz des Fahrzeugs und dem hydraulischen Eingriffsanschlag (2) eingefügt und fest mit dem Radsatz des Fahrzeugs und dem hydraulischen Eingriffsanschlag (2) verbunden ist, um eine Baugruppe zu bilden, die um eine Gleichgewichtsposition herum schwingt, wobei der hydraulische Eingriffsanschlag (2) in Abstand zur Karosserie (3) und zum Radsatz des Fahrzeugs positioniert und dafür eingerichtet ist, die Übertragung der Vibrationen des Rades (R) auf die Karosserie (3) des Fahrzeugs bei den Ausschlägen des entsprechenden Rades (R) zu begrenzen, wobei das elastisch verformbare Element (4) fest mit einem Aufhängungsarm (5) des entsprechenden Radsatzes verbunden ist, und wobei der hydraulische Eingriffsanschlag (2) einen Zylinder (6) und einen Kolben (7) umfasst, die in Bezug zueinander beweglich sind, wobei der Kolben (7) eine Stange (8) umfasst, die zum Zylinder (6) koaxial ist und von diesem Letzteren zur Karosserie (3) des Fahrzeugs hin vorspringt, sodass das Ende der Stange (8) und das Ende des Zylinders (6), das der Stange (8) gegenüberliegt, dazu in der Lage sind, jeweils an der Karosserie (3) und am Aufhängungsarm (5) des Fahrzeugs in Anlage zu kommen, wenn der hydraulische Eingriffsanschlag (2) aktiv ist, und wobei der Zylinder (6) des hydraulischen Eingriffsanschlags (2) eine zylindrische Innenwand (9) umfasst, die eine Kompressions-Innenkammer (10) definiert, welche mit einem Hydraulikfluid gefüllt ist und in der der Kolben (7) in Bezug auf den Zylinder (6) beweglich ist, und eine konzentrische Außenkammer (11) zum Ausgleich des Volumens, das von der Stange (8) in der Kompressionskammer des Zylinders (6) des hydraulischen Eingriffsanschlags (2) eingenommen wird.

2. Aufhängungssystem nach Anspruch 1, **dadurch gekennzeichnet, dass** das elastisch verformbare Element (4) eine Schraubenfeder ist, deren Enden jeweils fest mit dem hydraulischen Eingriffsanschlag (2) und dem Aufhängungsarm (5) des entsprechenden Radsatzes verbunden sind.

3. Aufhängungssystem nach Anspruch 1 oder 2, **dadurch gekennzeichnet, dass** die zylindrische Innenwand (9) des Zylinders (6) des hydraulischen Eingriffsanschlags (2) eine Vielzahl von radialen Löchern (12) umfasst, die durch dieselbe hindurchgehen und die Zirkulation des Fluids zwischen der Kompressionskammer (10) und der Ausgleichskammer (11) des Zylinders (6) des hydraulischen Eingriffsanschlags (2) ermöglichen, wenn sich der Kolben (7) und der Zylinder (6) des hydraulischen Eingriffsanschlags (2) in Bezug zueinander bewegen.

4. Aufhängungssystem nach Anspruch 1, 2 oder 3, gekennzeichnet, dass der hydraulische Eingriffsanschlag (2) einen mechanischen komprimierbaren ringförmigen Anschlag (13) umfasst, der von der Stange (8) des Kolbens (7) durchlaufen wird und der Karosserie (3) zugewandt fest mit dem Zylinder (6) des hydraulischen Eingriffsanschlags (2) verbunden und dazu in der Lage ist, an der Karosserie (3) des Fahrzeugs in Anlage zu kommen, wenn der Kolben (7) im Zylinder (6) des hydraulischen Eingriffsanschlags (2) am Hubende ankommt.

5. Aufhängungssystem nach einem der Ansprüche 1 bis 4, **dadurch gekennzeichnet, dass** es eine Aufhängungsfeder (14) umfasst, die um den Dämpfer (1) herum montiert ist.

6. Radsatz eines Fahrzeugs, von dem jedes Rad (R) ein Aufhängungssystem nach einem der Ansprüche 1 bis 5 umfasst.

7. Kraftfahrzeug, dessen hinterer Radsatz dem Radsatz nach Anspruch 6 konform ist.

## Claims

1. Hydraulic suspension system of a vehicle wheel (R), in particular of an automotive vehicle, comprising a hydraulic shock absorber (1), a leading stop (2) offset with respect to the shock absorber (1), the latter and the leading stop (2) being interposed between the body (3) and the corresponding wheel axle of the vehicle, wherein the leading stop (2) is hydraulic and **characterised in that** the suspension system comprises an elastically deformable element (4) interposed between the wheel axle of the vehicle and the hydraulic leading stop (2) so as to form a unit that oscillates around a position of equilibrium, wherein the hydraulic leading stop (2) is positioned at a distance of the body (3) and the wheel axle of the vehicle, and arranged to limit the transmission of vibrations of the wheel (R) to the body (3) of the vehicle during lateral movements of the corresponding wheel (R), wherein the elastically deformable element (4) is secured to a suspension arm (5) of the corresponding wheel axle, and wherein the hydraulic leading stop (2) comprises a cylinder (6) and a piston (7) that are mobile with respect to one another, the piston (7) comprising a rod (8) that is coaxial with the cylinder (6) and protrudes from the latter towards the body (3) of the vehicle so that the end of the rod (8) and the end of the cylinder (6) opposite to the rod (8) are configured to abut respectively against the body (3) and the suspension arm (5) of the vehicle when the hydraulic leading stop (2) is active, and wherein the cylinder (6) of the hydraulic leading stop (2) comprises an inner cylindrical wall (9) defining an internal compression chamber (10) filled with a hydraulic fluid and wherein the piston (7) is mobile with respect to the cylinder (6), and a concentric external chamber (11) to compensate for the volume occupied by the rod (8) in the compression chamber of the cylinder (6) of the hydraulic leading stop (2).

2. Suspension system according to claim 1, **characterised in that** the elastically deformable element (4) is a coil spring, the ends of which are respectively secured to the hydraulic leading stop (2) and to the suspension arm (5) of the corresponding wheel axle.

3. Suspension system according to claim 1 or 2, **characterised in that** the inner cylindrical wall (9) of the cylinder (6) of the hydraulic leading stop (2) comprises a plurality of radial through-holes (12) enabling, when the piston (7) and the cylinder (6) of the hydraulic leading stop (2) move with respect to one another, the circulation of fluid between the compression chamber (10) and the compensation chamber (11) of the cylinder (6) of the hydraulic leading stop (2).

4. Suspension system according to claim 1, 2 or 3, characterised that the hydraulic leading stop (2) comprises an annular compressible mechanical stop (13) intersected by the rod (8) of the piston (7) and secured to the cylinder (6) of the hydraulic leading stop (2) facing the body (3) and configured to abut against the body (3) of the vehicle when the piston (7) reaches its end position in the cylinder (6) of the hydraulic leading stop (2).

5. Suspension system according to one of the claims 1 to 4, **characterised in that** it comprises a suspension spring (14) mounted around the shock absorber (1).

6. Wheel axle of a vehicle, of which each wheel (R) comprises a suspension system according to one of the claims 1 to 5.

7. Automotive vehicle of which the rear wheel axle corresponds to the wheel axle according to claim 6.
